(19) Europäisches Patentamt
European Patent Office
Office européen des brevets

(11)  EP 3 305 558 B1

(12)  EUROPEAN PATENT SPECIFICATION

(45) Date of publication and mention
of the grant of the patent:
**13.11.2019  Bulletin 2019/46**

(51) Int Cl.:
***B60C 11/12*** *(2006.01)*      ***B60C 11/03*** *(2006.01)*

(21) Application number: **16799850.9**

(22) Date of filing: **16.05.2016**

(86) International application number:
**PCT/JP2016/064409**

(87) International publication number:
**WO 2016/190144 (01.12.2016 Gazette 2016/48)**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2015  JP 2015106562**

(43) Date of publication of application:
**11.04.2018  Bulletin 2018/15**

(73) Proprietor: **Bridgestone Corporation
Tokyo 104-8340 (JP)**

(72) Inventor: **SAKURAI, Taro
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 2 774 782       WO-A1-2014/207981
JP-A- 2000 255 219      JP-A- 2000 255 219
JP-A- 2007 045 316      JP-A- 2011 105 135
JP-A- 2011 105 135      JP-A- 2013 079 016
JP-A- 2014 189 100**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to a tire which suppresses uneven wear, in particular, a tire which suppresses uneven wear of a shoulder land portion.

[Background Art]

Conventionally, in a pneumatic tire (hereinafter, referred to as a tire) mounted to a passenger vehicle, various techniques are adopted in order to suppress uneven wear of a tread. As one aspect of the uneven wear of the tread, shoulder uneven wear in which a shoulder land portion is worn more quickly than a center land portion, is known.
In order to suppress such uneven wear, for example, it is proposed to form a pair of narrow grooves (lateral grooves) extended in a tire width direction, on the shoulder land portion (for example, Patent Literature 1). Specifically, an outward lateral groove opened to a circumferential groove at an outer side in the tire width direction and an inward lateral groove opened to a circumferential groove at an inner side in the tire width direction are formed in the shoulder land portion. According to such a tire, deformation of the shoulder land portion can be suppressed without forming a lateral groove which partitions the shoulder land portion, and thereby the uneven wear (heel and toe wear) of the shoulder land portion is suppressed. Attention is also drawn to JP 2000-255219 A, JP 2011-105135 A, EP 2774782 A1 and JP 2007-045316 A, which each disclose sipes having a zigzag portion.

[Citation List]

[Patent Literature]

[PTL 1] Japanese Unexamined Patent Application Publication No. 2007-261296 (pages 4 to 6 and Fig. 1)

[Summary of Invention]

In recent years, there is a tendency that a vehicle height becomes high especially in a small vehicle (which belongs to the smallest vehicle class in Japan, for example, a displacement of 660 cc or less) by considering the comfortability and the loaded amount of cargos. Further, in minivans which require high comfortability and large loaded amount of cargos, the vehicle height is generally high.
The vehicle having high vehicle height has a high center of gravity thereof, and therefore a large load is applied especially to the shoulder land portion in turning. Consequently, the shoulder uneven wear is especially apt to arise.
Accordingly, an object of the present invention is, in consideration of the problem described above, to provide a tire capable of suppressing shoulder uneven wear effectively when the tire is mounted to a vehicle having high vehicle height.
A feature of the present invention includes that, in a tire having a center land portion (center land portion 20) formed in a region including a tire equatorial line (tire equatorial line CL) and a shoulder land portion (for example, shoulder land portion 30) formed at an outer side in a tire width direction with respect to the center land portion, a width direction sipe (width direction sipe 100) extended in the tire width direction and terminated in the shoulder land portion is formed in the shoulder land portion, and the width direction sipe includes a zigzag portion (zigzag portion 112) formed in a zigzag shape in a tire circumferential direction toward at least an inner side of a tire radial direction; a center region (center region Wctr) located at a side of the tire equatorial line in the tire width direction; a shoulder region (inner shoulder region Win) located at a side of a ground contact end of the shoulder land portion in the tire width direction; and an intermediate region (intermediate region Wmid) located between the center region and the shoulder region in the tire width direction, and the zigzag portion in the center region and the zigzag portion in the shoulder region are longer than the zigzag portion in the intermediate portion in the tire radial direction.
In the feature of the present invention, the width direction sipe includes a straight portion (straight portion 111) formed in a straight shape in the tire radial direction and the tire width direction from a tread surface of the shoulder land portion to a predetermined depth of the width direction sipe.
In the feature of the present invention, a ratio of the straight portion to the zigzag portion in the tire radial direction may become smaller toward the ground contact end of the shoulder land portion.
In the feature of the present invention, the zigzag portion may include a plurality of bent portions (bent portions 112a, 112b, 112c) in a section along the tire circumferential direction, and the number of the bent portions in the intermediate region may be smaller than the number of the bent portions in at least one of the center region and the shoulder region.

In the feature of the present invention, a width Wsho of the shoulder land portion in the tire width direction and a width Ws of the width direction sipe may be set to fulfill the relation of $0.75 \leq$ (width Ws / width Wsho) $\leq 0.885$.

In the feature of the present invention, the width direction sipe may be formed in each of a shoulder land portion located at an inner side when the tire is mounted to the vehicle and a shoulder land portion located at an outer side when the tire is mounted to the vehicle.

[Brief Description of Drawings]

[Fig. 1] Fig. 1 is a plane developed view of a part of a tread surface 15 of a tire 10.

[Fig. 2] Fig. 2 is a view illustrating a shape of a width direction sipe 100 formed in a shoulder land portion 30 .

[Fig. 3] Fig. 3 is a view illustrating a shape of a width direction sipe 200 formed in a shoulder land portion 30 .

[Fig. 4] Fig. 4 is a view illustrating a shape of a width direction sipe 300 formed in a shoulder land portion 40.

[Fig. 5] Fig. 5 is a view illustrating a shape of a width direction sipe 400 formed in a shoulder land portion 40.

[Fig. 6] Fig. 6 (a) is an enlarged plane view of a part of the shoulder land portion 30. Fig. 6(b) is an enlarged plane view of a part of the shoulder land portion 40.

[Fig. 7] Fig. 7 is a view for describing a state of wear of tires according to a comparative example and examples.

[Fig. 8] Fig. 8 (a) is a plane developed view of a part of a shoulder land portion 30 including a width direction sipe 100A according to a modified example. Fig. 8(b) is a perspective view virtually illustrating a shape of the width direction sipe 100A.

[Description of Embodiments]

Next, embodiments of a tire according to the present invention are described with reference to the drawings . In the following description of the drawings, the same or similar reference numerals are assigned to the same or similar parts.

(1) Schematic Configuration of Tire

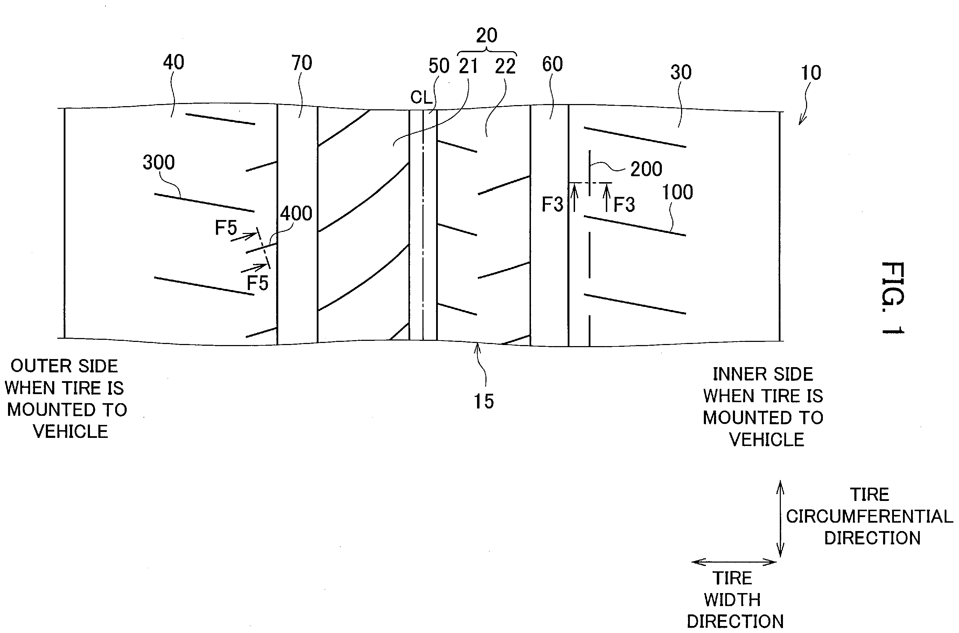

Fig. 1 is a plane developed view of a part of a tread surface 15 of a tire 10 according to the present embodiment. As shown in Fig. 1, a center land portion 20, a shoulder land portion 30 and a shoulder land portion 40 are formed on the tread surface 15 of the tire 10. The tire 10 is formed as a pneumatic radial tire used by being mounted to a rim wheel (not shown). Here, inert gas such as nitrogen gas may be filled into the tire 10 mounted to the rim wheel.

The tire 10 can be used in a general passenger vehicle, especially used preferably in a wagon type minicar (small vehicle) or a minivan having a high center of gravity. However, a kind of a vehicle to which the tire 10 can be applied is not limited to such passenger vehicles.

The center land portion 20 is formed in a region including a tire equatorial line CL passing a center of the tire 10 in the tire width direction and extending in a tire circumferential direction. In the present embodiment, the center land portion 20 is provided with two land portion blocks 21, 22 separated by a circumferential groove 50 formed at a position of the tire equatorial line CL.

Here, as shown in Fig. 1, a plurality of sipes or narrow grooves may be formed in the land portion blocks 21, 22, and therefore the center land portion 20 is not especially limited to a shape shown in Fig. 1.

The shoulder land portion 30 is located at an inner side when the tire is mounted to the vehicle. The shoulder land portion 30 is formed in a block shape extended in the tire circumferential direction. The shoulder land portion 30 is formed at an outer side of a circumferential groove 60 in the tire width direction opposite to the center land portion 20. A width direction sipe 100 and a circumferential direction sipe 200 are formed in the shoulder land portion 30.

The shoulder land portion 40 is located at an outer side when the tire is mounted to the vehicle. The shoulder land portion 40 is formed in a block shape extended in the tire circumferential direction. The shoulder land portion 40 is formed at an outer side of a circumferential groove 70 in the tire width direction opposite to the center land portion 20. A width direction sipe 300 and a circumferential direction sipe 400 are formed in the shoulder land portion 40.

The width direction sipe 100 is extended in the tire width direction and terminated in the shoulder land portion 30. Here, as shown in Fig. 1, the width direction sipe 100 may not be parallel to the tire width direction, and therefore the width direction sipe 100 may be slightly inclined to the tire width direction (for example, 30 degrees or less against the tire width direction).

The circumferential direction sipe 200 is extended in tire the circumferential direction and terminated in the shoulder land portion 30. Here, the circumferential direction sipe 200 may not be parallel to the tire circumferential direction, and therefore the circumferential direction sipe 200 may be slightly inclined to the tire width direction (for example, 30 degrees or less against the tire width direction).

The circumferential direction sipe 200 is formed in a region at an inner side of the shoulder land portion 30 in the tire width direction, namely at a position close to the center land portion 20 (the land portion block 21). Further, the circumferential direction sipe 200 is formed to overlap with the width direction sipe 100 in the tire width direction.

The width direction sipe 300 is extended in the tire width direction and terminated in the shoulder land portion 40. Here, as shown in Fig. 1, the width direction sipe 300 may not be parallel to the tire width direction, and therefore the width direction sipe 300 may be slightly inclined to the tire width direction (for example, 30 degrees or less against the tire width direction).

In this way, in the present embodiment, the width direction sipes extended in the tire width direction are formed in the shoulder land portion 30 located at the inner side when the tire is mounted to the vehicle and the shoulder land portion 40 located at the outer side when the tire is mounted to the vehicle, respectively.

The circumferential direction sipe 400 is formed in a region at an inner side of the shoulder land portion 40 in the tire width direction, namely at a position close to the center land portion 20 (the land portion block 22). Further, a part of the circumferential direction sipe 400 is formed to overlap with the width direction sipe 300 in the tire width direction.

Further, a two-dot chain line in Fig. 1 illustrates a pitch of the same tread pattern repeated in the tire circumferential direction. Generally, a plurality kind of pitches (pitch variation) in the tire circumferential direction is set in the tire 10.

(2) Configuration of Shoulder Land Portion

Next, each configuration of the shoulder land portion 30 and the shoulder land portion 40 is described. Specifically, each shape of the width direction sipe 100 and the circumferential direction sipe 200 formed in the shoulder land portion 30 and each shape of the width direction sipe 300 and the circumferential direction sipe 400 formed in the shoulder land portion 40 are described.

(2.1) Shoulder Land Portion 30

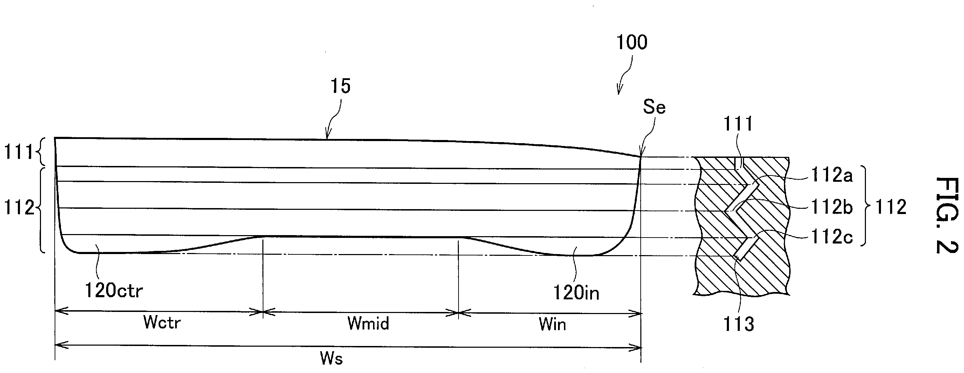

Fig. 2 illustrates the shape of the width direction sipe 100 formed in the shoulder land portion 30. Specifically, Fig. 2 illustrates a front shape of the width direction sipe 100 along the tire width direction, and a side shape of the width direction sipe 100.

As shown in Fig. 2, the width direction sipe 100 is provided with a straight portion 111 and a zigzag portion 112.

The straight portion 111 is formed in a straight shape in the tire radial direction and the tire width direction, namely a flat plate shape. The straight portion 111 is formed from the tread surface 15 of the shoulder land portion 30 to a predetermined depth of the width direction sipe 100.

A ratio of the straight portion 111 to the zigzag portion 112 in the tire radial direction, namely a depth direction of the width direction sipe 100, is not especially limited, however as shown in Fig. 2, it is preferable that a length (depth) of the zigzag portion 112 is longer than a length of the straight portion 111. Further, a depth of the width direction sipe 100 is preferably set in a range between 4 mm and 10 mm.

The ratio of the straight portion 111 to the zigzag portion 112 becomes smaller toward a ground contact end Se of the shoulder land portion 30. This is because the tread surface 15 of the shoulder land portion 30 is inclined to be closer to the inner side of the tire radial direction toward the outer side of the tire width direction and therefore a depth of the straight portion 111 becomes smaller toward the ground contact end Se.

A position of the ground contact end Se is defined by the tire 10 mounted to a wheel rim (normal rim wheel) having a standard size defined in Year Book of Japan Automobile Tyre Manufacturers Association (JATMA) in a state in which measurement conditions (mounting to an applied rim, setting of defined inner pressure, setting temperature or the like) defined in JATMA are fulfilled. Here, other standard (TRA, ETRTO) may be adopted instead of JATMA.

The zigzag portion 112 is formed at an inner side of the straight portion 111 in the tire radial direction. That is, the zigzag portion 112 is formed at a position deeper than the straight portion 111 in the depth direction of the width direction sipe 100.

The zigzag portion 112 is provided with a plurality of bent portions, specifically bent portions 112a to 112c, in a section along the tire circumferential direction. More specifically, the bent portion 112a, the bent portion 112b and the bent portion 112c are formed from a side of the treat surface 15 along the tire radial direction (the depth direction of the width direction sipe 100). A bottom portion 113 is located at an inner side of the bent portion 112c in the tire radial direction.

Each of the angles of the bent portions 112a, 112b, 112c is set to be approximately 90 degrees in a section along the tire circumferential direction. The angle may be set to be more than 90 degrees, however around 90 degrees are preferable from a viewpoint of suppressing falling of the shoulder land portion 30 effectively.

The zigzag portion 112 may be formed in a zigzag shape in the tire circumferential direction at least toward the inner side of the tire radial direction. Accordingly, as described below (see other embodiments), the zigzag portion 112 may be formed as a so-called three-dimensional sipe formed in a zigzag shape in the tire circumferential direction toward the tire width direction as well as the tire radial direction.

Here, as shown in Fig. 2, the width direction sipe 100 is described by separating into a center region Wctr, an intermediate region Wmid, and an inner shoulder region Win.

The center region Wctr is located at a side of the tire equatorial line CL. The inner shoulder region Win is located at a side of the ground contact end Se of the shoulder land portion 30. The intermediate region Wmid is located between the center region Wctr and the inner shoulder region Win.

The zigzag portion 112 in the center region Wctr and the zigzag portion 112 in the inner shoulder region Win are longer than the zigzag portion 112 in the intermediate region Wmid in the tire radial direction.

That is, the maximum groove depth of each of the width direction sipes 100 in the center region Wctr and the inner shoulder region Win is deeper than the maximum groove depth of the width direction sipe 100 in the intermediate region Wmid. Thus, a deep groove portion 120ctr is formed in the center region Wctr, and a deep groove portion 120 in is formed in the inner shoulder region Win.

The number of the bent portions in the intermediate region Wmid is smaller than the number of the bent portions in each of the center region Wctr and the inner shoulder region Win. Specifically, the number of the bent portions in each of the center region Wctr and the inner shoulder region Win is three (the bent portions 112a, 112b, 112c), while the number of the bent portions in the intermediate region Wmid is two (the bent portions 112a, 112b).

Further, the number of bent portions in each of the center region Wctr and the inner shoulder region Win is not necessarily set to be larger than the number of the bent portions in the intermediate region Wmid. That is, the number of the bent portions in the intermediate region Wmid may be set to be smaller than the number of the bent portions in either of the center region Wctr and the inner shoulder region Win.

In the present embodiment, the number of "peaks" caused by the bent portions from the tread surface 15 to the bottom portion 113 in each of the center region Wctr and the inner shoulder region Win is set to 3.5 including an inclined portion from the bent portion 112c to the bottom portion 113. On the other hand, the number of "peaks" caused by the bent portions in the intermediate region Wmid is set to 3.0.

Further, a ratio of each of the center region Wctr and the inner shoulder region Win to a width Ws, which is a whole width of the width direction sipe 100, is preferably set to fulfill the following each relation.

$$0.34 < (\text{center region Wctr / width Ws}) < 0.49 \cdots \text{(formula 1)}$$

$$0.19 < (\text{inner shoulder region Win / width Ws}) < 0.25 \cdots \text{(formula 2)}$$

Here, in the present embodiment, (center region Wctr / width Ws) in the formula 1 is 0.47, and (inner shoulder region Win / width Ws) in the formula 2 is 0.22. Further, in a case in which each value thereof is beyond the range of each of the formulas 1 and 2, a suppression effect of the uneven wear of the shoulder land portion 30 is deteriorated.

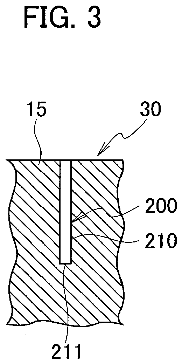

Fig. 3 illustrates the shape of the circumferential direction sipe 200 formed in the shoulder land portion 30. Specifically, Fig. 3 illustrates a side shape of the circumferential direction sipe 200 seen from a F3-F3 direction shown in Fig. 1. As shown in Fig. 3, the circumferential direction sipe 200 is formed in a simply flat plate shape.

The circumferential direction sipe 200 is provided with a side wall 210, and a bottom portion 211 continued to the side wall 210. It is preferable that a groove depth of the circumferential direction sipe 200 from the tread surface 15 to the bottom portion 211 is substantially the same as a groove depth of the width direction sipe 100 in the intermediate region Wmid or is smaller than the groove depth of the width direction sipe 100 in the intermediate region Wmid.

(2.2) Shoulder Land Portion 40

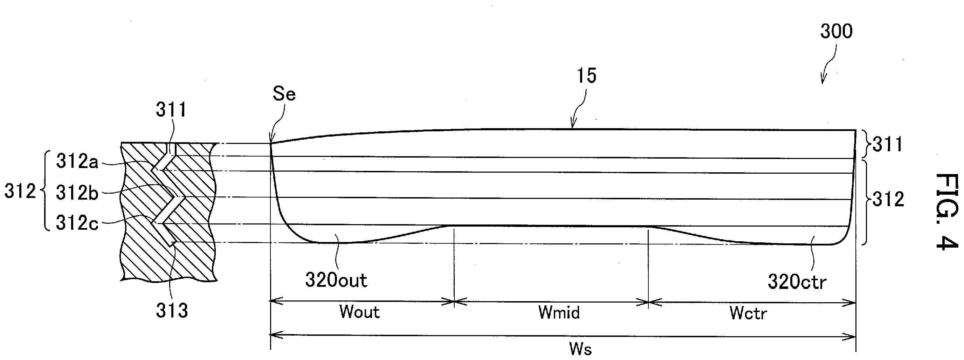

Fig. 4 illustrates the shape of the width direction sipe 300 formed in the shoulder land portion 40. Specifically, Fig. 4 illustrates a front shape of the width direction sipe 300 along the tire width direction, and a side shape of the width direction sipe 300. Here, the width direction sipe 300 is formed symmetrically to the width direction sipe 100, and therefore the description of a similar part to the width direction sipe 100 is omitted for convenience.

As shown in Fig. 4, the width direction sipe 300 is provided with a straight portion 311 and a zigzag portion 312.

The straight portion 311 and the zigzag portion 312 have shapes similar to the straight portion 111 and the zigzag portion 112, respectively. Similar to the width direction sipe 100, it is preferable that a length (depth) of the zigzag portion 312 is longer than a length of the straight portion 311. A ratio of the straight portion 311 to the zigzag portion 312 in a depth direction of the width direction sipe 300 becomes smaller toward the ground contact end Se of the shoulder land portion 40.

In the zigzag portion 312, similar to the width direction sipe 100, a bent portion 312a, a bent portion 312b and a bent portion 312c are formed from the side of the tread surface 15 along the tire radial direction (the depth direction of the width direction sipe 300). A bottom portion 313 is located at an inner side of the bent portion 312c in the tire radial direction.

In the width direction sipe 300, an outer shoulder region Wout is located at a side of the ground contact end Se of the shoulder land portion 40. An intermediate region Wmid is located between a center region Wctr and the outer shoulder region Wout.

The zigzag portion 312 in the center region Wctr and the zigzag portion 312 in the outer shoulder portion Wout are longer than the zigzag portion 312 in the intermediate region Wmid in the tire radial direction.

That is, the maximum groove depth of the width direction sipes 300 in each of the center region Wctr and the outer shoulder region Wout is deeper than the maximum groove depth of the width direction sipe 300 in the intermediate region Wmid. Thus, a deep groove portion 320ctr is formed in the center region Wctr, and a deep groove portion 320out is formed in the outer shoulder region Wout.

Here, the shape or the like of each of the bent portions 312a, 312b, 312c formed in the zigzag portion 312 is similar to that in the zigzag portion 112 of the width direction sipe 100. Further, similar to the width direction sipe 100, a ratio of each of the center region Wctr and the outer shoulder region Wout to the width Ws, which is a whole width of the width direction sipe 300, is preferably set to fulfill the each relation represented by the formulas 1 and 2 . Here, the formula 2 is replaced as below.

$$0.19 < (\text{outer shoulder region Wout} / \text{width Ws}) < 0.25 \cdots (\text{formula } 2')$$

In the present embodiment, (outer shoulder region Wout / width Ws) in the formula 2' is 0.22. Further, in a case in which the value thereof is beyond the range of the formula 2', the suppression effect of the uneven wear of the shoulder land portion 30 is deteriorated.

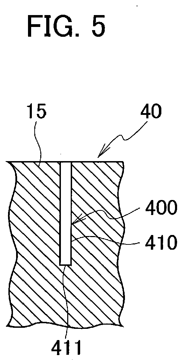

Fig. 5 illustrates the shape of the circumferential direction sipe 400 formed in the shoulder land portion 40. Specifically, Fig. 5 illustrates a side shape of the circumferential direction sipe 400 seen from a F5-F5 direction shown in Fig. 1. As shown in Fig. 5, the circumferential direction sipe 400 is formed in a simply flat plate shape.

The circumferential direction sipe 400 is provided with a side wall 410, and a bottom portion 411 continued to the side wall 210. It is preferable that a groove depth of the circumferential direction sipe 400 from the tread surface 15 to the bottom portion 411 is set in a range between the groove depth of the width direction sipe 100 in the intermediate region Wmid and the groove depth of the width direction sipe 100 in the center region Wctr or the outer shoulder land portion Wout.

(3) Size of Width Direction Sipes and Positional Relationships between Width Direction Sipes and Circumferential Direction Sipes

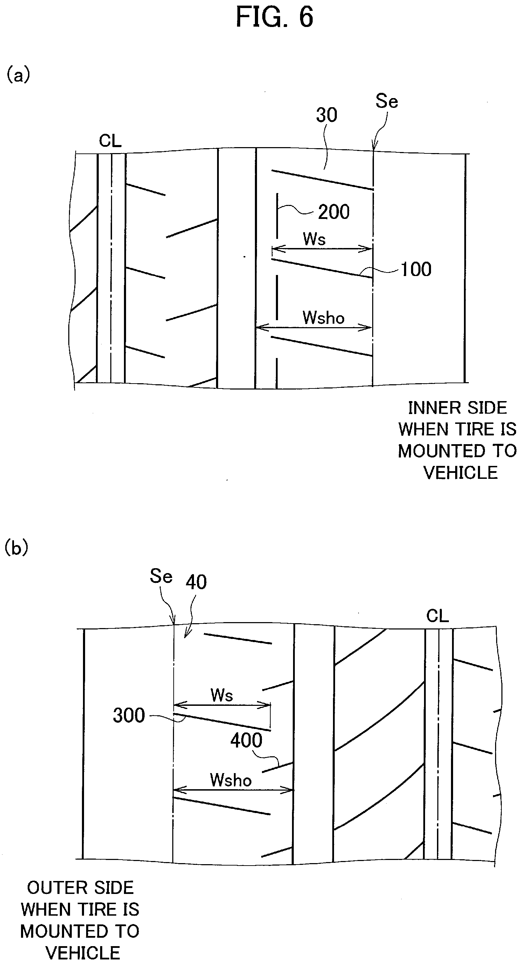

Next, each size of the width direction sipes 100, 300 described above, and each positional relationship between the width direction sipes 100, 300 and the circumferential direction sipes 200, 400 are described. Figs. 6(a) and 6(b) are enlarged plane views of a part of the shoulder land portion 30 and a part of the shoulder land portion 40, respectively.

As shown in Fig. 6(a), it is preferable that a width Wsho of the shoulder land portion 30 and the width Ws of the width direction sipe 100 in the tire width direction fulfill the following relation.

$$0.75 \leq (\text{width Ws} / \text{width Wsho}) \leq 0.885 \cdots (\text{formula } 3)$$

In the present embodiment, (width Ws / width Wsho) defined by the width Ws of the width direction sipe 100 and the width Wsho of the shoulder land portion 30 is 0.818. Further, in a case in which the value thereof is beyond the range of the formula 3, the suppression effect of the uneven wear of the shoulder land portion 30 is deteriorated.

Further, it is preferable that a width Wsho of the shoulder land portion 40 and a width Ws of the width direction sipe 300 in the tire width direction fulfill a similar relation. Specifically, it is preferable that the width Wsho and the width Ws fulfill the following relation.

$$0.75 \leq (\text{width Ws} / \text{width Wsho}) \leq 0.885 \cdots (\text{formula } 3')$$

In the present embodiment, (width Ws / width Wsho) defined by the width Ws of the width direction sipe 300 and the width Wsho of the shoulder land portion 40 is 0.869.

As shown in Fig. 6(a), in the present embodiment, the width direction sipe 100 is extended from a position of the ground contact end Se of the shoulder land portion 30 toward the inner side of the tire width direction. Similarly, as shown in Fig. 6(b), in the present embodiment, the width direction sipe 300 is extended from a position of the ground contact end Se of the shoulder land portion 40 toward the inner side of the tire width direction.

Functions and Effects

Next, functions and effects of the tire 10 described above are described. Table 1 shows a condition of a wear test of the tire 10 (examples 1 to 4) in which the width direction sipes 100, 300 described above are formed and a tire (comparative example) in which the width direction sipe is not formed and a result thereof.

[Table 1]

| | Comparative example | Example 1 | Example 2 | Example 3 | Example 4 |
|---|---|---|---|---|---|
| Tire size | 155/65R14 | 155/65R14 | 155/65R14 | 155/65R14 | 155/65R14 |
| With direction sipe | No | Yes | Yes | Yes | Yes |
| Index of wear life | 100 | 108 | 105 | 107 | 101 |
| center region Wctr / width Ws (formule 1) | NA. | 0.47 | 0.34 | 0.48 | 0.53 |
| inner shoulder region Win/width Ws (formula 2) and outer shoulder region Wout/width Ws (formula 2') | N.A. | 0.22 | 0.20 | 0.24 | 0.27 |
| width Ws / width Wsho (outer side) (formula 3) | N.A. | 0.818 | 0.772 | 0.865 | 0.899 |
| width Ws / width Wsho (inner side) (formula 3') | N.A. | 0.869 | 0.82 | 0.88 | 0.912 |

As shown in Table 1, as an index of wear life of the tire according to the comparative example is set to 100, each index of the wear life of the tires according to the examples 1 to 4 is improved to 101 or more.

Here, "index of wear life" denotes that a wear amount of a tread portion after an evaluation target tire travels for a predetermined distance by means of a drum test, is indexed against that of the comparative example as a reference (the wear amount is smaller as the value is larger).

Specifically, in the drum test, an input frequency distribution in an actual use environment to the tire mounted to a front axle is reproduced. Further, after the tire travels for the predetermined distance, the tire rotation of the right tire and the left tire on the front axle is performed. Further, each wear amount is measured based on a depth of the retaining groove (including the sipe) formed in each of the shoulder land portion located at the inner side when the tire is mounted to the vehicle and the shoulder land portion located at the outer side when the tire is mounted to the vehicle.

As shown in Table 1, in the tire according to example 4, each value thereof is beyond the each range represented by the formulas 1, 2, 2', 3, and 3' (underlines are applied in Table 1).

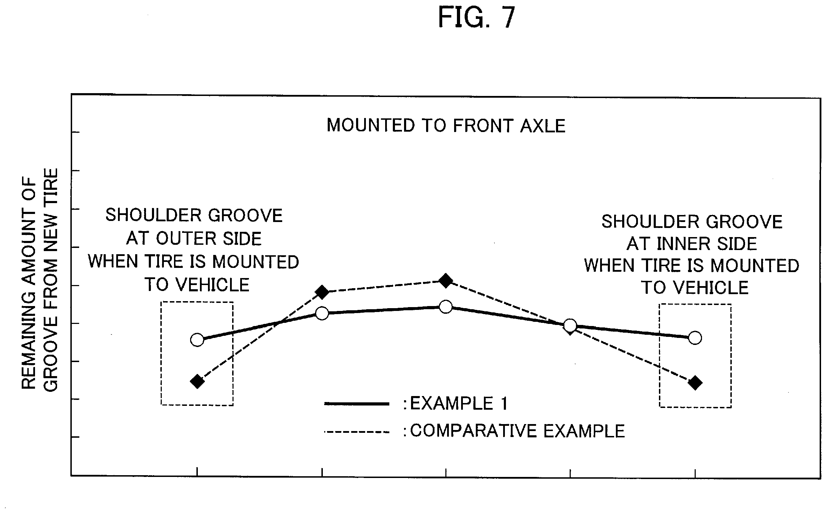

Fig. 7 is a view for describing a state of wear of the tires according to the comparative example and the example 1 shown in Table 1. Specifically, Fig. 7 shows a graph of each remaining amount of the groove of the shoulder land portion at the outer side, the center land portion, and the shoulder land portion at the inner side when the tire is mounted to the front axle of a vehicle (minicar). Further, as described above, after the evaluation target tire travels for the predetermined distance, the tire rotation of the right tire and the left tire is performed.

As shown in Fig. 7, the tire according to the example 1 has less wear difference between the shoulder land portions at the both sides and the center land portion, and therefore the shoulder land portions and the center land portion are worn uniformly. On the other hand, the tire according to the comparative example has large wear difference between the shoulder land portions at the both sides and the center land portion, and therefore the shoulder land portions are worn more quickly than the center land portion. Thus, the tire is apt to reach a use limit earlier due to the wear of the shoulder land portion in spite of the sufficient remaining amount of the groove of the center land portion.

The tire according to the example 1 has less wear difference between the shoulder land portions at the both sides and the center portion, and therefore travel distance of the tire until the use limit thereof due to the wear can be extended.

That is, in the tire 10 described above, the zigzag portion 112 in the center region Wctr and the zigzag portion 112 in the inner shoulder region Win of the width direction sipe 100 are longer than the zigzag portion 112 in the intermediate region Wmid in the tire radial direction. Thus, when the load is applied, the shoulder land portions 30 separated by the zigzag portion 112 support one another, and therefore block rigidity of the inner shoulder region Win and the center region Wctr is improved. When the block rigidity is improved, deformation of each of the inner shoulder region Win and the center region Wctr of the shoulder land portion 30 is suppressed, and therefore ground contact pressure of each of the inner shoulder region Win and the center region Wctr is decreased.

In the shoulder land portion, especially the shoulder land portion at the inner side when the tire is mounted to the vehicle, there is a tendency that each ground contact pressure of the shoulder land portions (parts adjacent to the circumferential groove) at a side of the ground contact end and a side of the center land portion becomes higher due to an influence of wheel alignment (especially, a camber angle) of the vehicle.

Such a tendency is remarkable in the minicars or the minivans in recent years. The cause of this is that the minicars having high vehicle height by considering high comfortability and large loaded amount of cargos or the minivans generally having high vehicle height are apt to be high in the center of gravity. Thus, a roll amount of the vehicle becomes especially large in turning, and therefore a high load is applied to the shoulder land portion and the ground contact pressure becomes high.

According to the tire 10, as described above, each ground contact pressure of the inner shoulder region Win and the center region Wctr can be decreased and the falling of the shoulder land portion 30 can be prevented by the improvement of the block rigidity.

Therefore, the shoulder uneven wear, specifically the wear of the inner shoulder region Win and the center region Wctr proceeding more quickly than the wear of the intermediate region Wmid, is suppressed. Further, the falling of the shoulder land portion 30 can be also prevented, and therefore heel and toe wear of the shoulder land portion 30 is also suppressed.

Further, such functions and effects are similarly obtained in the shoulder land portion 40 at the outer side when the tire is mounted to the vehicle, although the degree of the wear is different from that of the shoulder land portion 30.

According to the present embodiment, the width direction sipe 100 is provided with the straight portion 111 from the tread surface of the shoulder land portion 30 to the predetermined depth of the width direction sipe 100. Thus, the rigidity of the shoulder land portion 30 close to the tread surface 15 is not excessively increased, and therefore the shoulder uneven wear can be suppressed while ensuring comfortability and suppressing pattern noise.

According to the present embodiment, the ratio of the straight portion 111 to the zigzag portion 112 in the tire radial direction becomes smaller toward the ground contact end Se of the shoulder land portion 30. Thus, the rigidity of the shoulder land portion 30 becomes relatively larger toward the ground contact end Se. That is, since the ground contact pressure of the shoulder land portion 30 becomes lower toward the ground contact end Se, the uneven wear near the ground contact end Se can be suppressed effectively.

According to the present embodiment, the number of the bent portions in the intermediate region Wmid is smaller than the number of the bent portions in each of the center region Wctr and the shoulder region Win. Thus, the block rigidity of each of the inner shoulder region Win and the center region Wctr is improved much more than that of the intermediate region Wmid, and as described above, each ground contact pressure of the inner shoulder region Win and the center region Wctr is decreased. Accordingly, the shoulder uneven wear, specifically the wear of the inner shoulder region Win and the center region Wctr proceeding more quickly than the wear of the intermediate region Wmid, is suppressed.

According to the present embodiment, the width Wsho of the shoulder land portion 30 and the width Ws of the width direction sipe 100 in the tire width direction fulfill the relation of $0.75 \leq$ (width Ws / width Wsho) $\leq 0.885$. Since the zigzag portion 112 is formed in the width direction sipe 100 such that the zigzag portion 112 in each of the inner shoulder region Win and the center region Wctr is longer than the zigzag portion 112 in the intermediate region Wmid, and since such a width direction sipe 100 is formed in the most part of the width of the shoulder land portion 30, the uneven wear of the shoulder land portion 30 close to the ground contact end Se and the shoulder land portion 30 close to the center land portion 20 can be suppressed effectively.

Further, the functions and the effects described above are similarly obtained in the shoulder land portion 40. Further, in the present embodiment, the width direction sipe 100 is formed in the shoulder land portion 30 located at the inner side when the tire is mounted to the vehicle, and the width direction sipe 300 is formed in the shoulder land portion 40 located at the outer side when the tire is mounted to the vehicle. Thus, the uneven wear of both of the shoulder land portions can be suppressed, and therefore life of the tire determined by the wear can be extended.

(5) Other Embodiments

As described above, the content of the present invention was disclosed through the embodiment of the present invention, however the descriptions and drawings that form a part of this disclosure are not to be considered as limitation to the present invention.

For example, the width direction sipe 100 (300) formed in the tire 10 may be modified as described below.

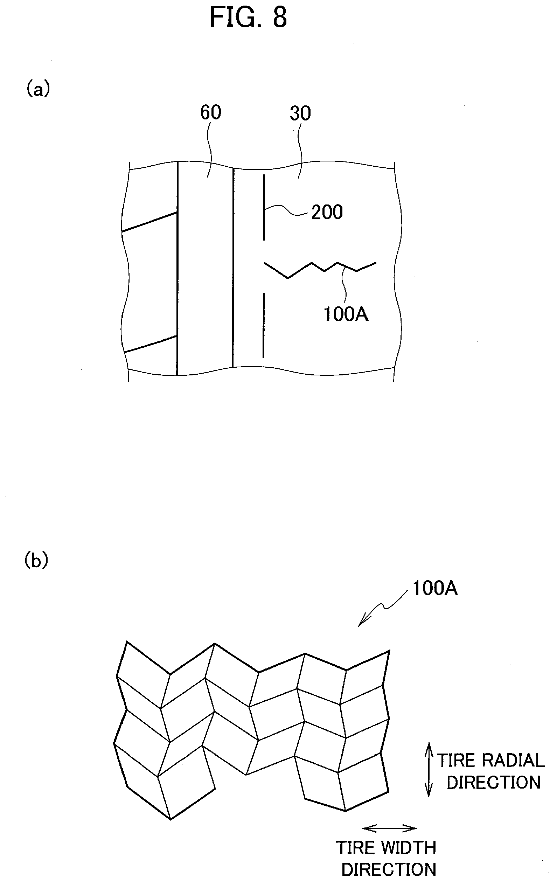

Figs. 8(a) and 8(b) are a plane developed view of a part of a shoulder land portion 30 including a width direction sipe 100A according to a modified example of the present invention and a perspective view virtually illustrating a shape of the width direction sipe 100A, respectively. As shown in Figs. 8(a) and 8(b), the width direction sipe 100A is formed in a zigzag shape in the tire radial direction, the tire circumferential direction and the tire width direction, namely a three-dimensional sipe. Such a width direction sipe 100A and the circumferential direction sipe 200 maybe formed in the shoulder land portion 30.

Further, as shown in Fig. 8(b), the width direction sipe 100A is formed, similar to the width direction sipe 100, such that a length of the width direction sipe 100A along the tire radial direction (depth) in each of a shoulder region and a center region is longer than a length the width direction sipe 100A along the tire radial direction (depth) in an intermediate region. Further, a three-dimensional sipe, which is similar to the width direction sipe 100A, may be formed in the shoulder land portion 40.

Further, in the embodiment described above, the width direction sipe is formed in each of the shoulder land portion 30 and the shoulder land portion 40, however the width direction sipe may be formed in either of the shoulder land portions. Further, in the embodiment described above, a plurality of the bent portions is formed in the zigzag portion 112, however the zigzag portion 112 may be formed in a shape in which a wave-like curve is repeated, instead of a definitely bent shape as long as the shoulder portions 30 separated by the zigzag portion 112 support one another.

[Industrial Applicability]

According to the feature of the present invention, the tire capable of suppressing shoulder uneven wear effectively even if the tire is mounted to a vehicle having high vehicle height, can be provided.

[Reference Signs List]

| | |
|---|---|
| 10: | tire |
| 15: | tread surface |
| 20: | center land portion |
| 21, 22: | land portion block |
| 30, 40: | shoulder land portion |
| 50, 60, 70: | circumferential direction sipe |
| 100, 100A: | width direction sipe |
| 111: | straight portion |
| 112: | zigzag portion |
| 112a, 112b, 112c: | bent portion |
| 113: | bottom portion |
| 120ctr: | deep groove portion |
| 120in: | deep groove portion |
| 200: | circumferential direction sipe |
| 210: | side wall |
| 211: | bottom portion |
| 300: | width direction sipe |
| 311: | straight portion |
| 312: | zigzag portion |
| 312a, 312b, 312c: | bent portion |
| 313: | bottom portion |
| 320ctr: | deep groove portion |
| 320out: | deep groove portion |
| 400: | circumferential direction sipe |
| 410: | side wall |
| 411: | bottom portion |

**Claims**

1. A tire (10) comprising:

a center land portion (20) formed in a region including a tire equatorial line (CL); and
a shoulder land portion (30, 40) formed at an outer side in a tire width direction with respect to the center land portion (20),
**characterized in that**:

a width direction sipe (100, 300) extended in the tire width direction and terminated in the shoulder land portion (30, 40)is formed in the shoulder land portion (30, 40);
the width direction sipe (100, 300) includes a zigzag portion (112, 312) formed in a zigzag shape in a tire circumferential direction toward at least an inner side of a tire radial direction, a center region (Wctr) located at a side of the tire equatorial line (CL) in the tire width direction, a shoulder region (Win, Wout) located at a side of a ground contact end of the shoulder land portion (30, 40) in the tire width direction, and an intermediate region (Wmid) located between the center region (Wctr) and the shoulder region (Win, Wout) in the tire width direction; and
the zigzag portion (112, 312) in the center region (Wctr) and the zigzag portion (112, 312) in the shoulder region (Win, Wout) are longer than the zigzag portion (112, 312) in the intermediate portion (Wmid) in the tire radial direction, wherein
the width direction sipe (100, 300) includes a straight portion (111, 311) formed in a straight shape in the tire radial direction and the tire width direction from a tread surface (15) of the shoulder land portion (30, 40)to a predetermined depth of the width direction sipe (100, 300).

2. The tire according to claim 1, wherein a ratio of the straight portion (111, 311) to the zigzag portion (112, 312) in the tire radial direction becomes smaller toward the ground contact end of the shoulder land portion (30, 40).

3. The tire according to claim 1, wherein the zigzag portion (112, 312) includes a plurality of bent portions (112a, 112b, 112c, 312a, 312b, 313c) in a section along the tire circumferential direction, and
the number of the bent portions (112a, 112b, 112c, 312a, 312b, 313c) in the intermediate region (Wmid) is smaller than the number of the bent portions (112a, 112b, 112c, 312a, 312b, 313c) in at least one of the center region (Wctr) and the shoulder region (Win, Wout).

4. The tire according to claim 1, wherein a width Wsho of the shoulder land portion (30, 40) in the tire width direction and a width Ws of the width direction sipe (100, 300) are set to fulfill the relation of $0.75 \leq$ (width Ws / width Wsho) $\leq 0.885$.

5. The tire according to claim 1, wherein the width direction sipe (100, 300) is formed in each of a shoulder land portion (30) located at an inner side when the tire (10) is mounted to the vehicle and a shoulder land portion (40) located at an outer side when the tire (10) is mounted to the vehicle.

**Patentansprüche**

1. Reifen (10), umfassend:

einen zentralen Stegabschnitt (20), welcher in einem Bereich geformt ist, welcher eine Reifenäquatoriallinie (CL) umfasst; und
einen Schulterstegabschnitt (30, 40), welcher auf einer Außenseite in einer Reifenbreitenrichtung im Verhältnis zu dem zentralen Stegabschnitt (20) geformt ist,
**dadurch gekennzeichnet, dass**:

eine Breitenrichtungslamelle (100, 300), welche sich in der Reifenbreitenrichtung erstreckt und in dem Schulterstegabschnitt (30, 40) endet, in dem Schulterstegabschnitt (30, 40) geformt ist;
die Breitenrichtungslamelle (100, 300) einen Zickzack-Abschnitt (112, 312), welcher zickzackförmig in einer Reifenumfangsrichtung zu mindestens einer Innenseite einer Reifenradialrichtung hin geformt ist, einen zentralen Bereich (Wctr), der auf einer Seite der Reifenäquatoriallinie (CL) in der Reifenbreitenrichtung angeordnet ist, einen Schulterbereich (Win, Wout), welcher auf einer Seite eines Bodenkontaktendes des Schulterstegabschnitts (30, 40) in der Reifenbreitenrichtung angeordnet ist, und einen Zwischenbereich (Wmid) umfasst, welcher zwischen dem zentralen Bereich (Wctr) und dem Schulterbereich (Win, Wout) in der Reifenbreitenrichtung angeordnet ist; und

der Zickzack-Abschnitt (112, 312) in dem zentralen Bereich (Wctr) und der Zickzack-Abschnitt (112, 312) in dem Schulterbereich (Win, Wout) länger als der Zickzack-Abschnitt (112, 312) in dem Zwischenbereich (Wmid) in der Reifenradialrichtung sind, wobei

die Breitenrichtungslamelle (100, 300) einen geraden Abschnitt (111, 311) umfasst, welcher geradlinig in der Reifenradialrichtung und in der Reifenbreitenrichtung von einer Lauffläche (15) des Schulterstegabschnitts (30, 40) bis zu einer vorbestimmten Tiefe der Breitenrichtungslamelle (100, 300) geformt ist.

2. Reifen nach Anspruch 1, wobei ein Verhältnis zwischen dem geraden Abschnitt (111, 311) und dem Zickzack-Abschnitt (112, 312) in der Reifenradialrichtung sich zum Bodenkontaktende des Schulterstegabschnitts (30, 40) hin reduziert.

3. Reifen nach Anspruch 1, wobei der Zickzack-Abschnitt (112, 312) eine Mehrzahl von gebogenen Abschnitten (112a, 112b, 112c, 312a, 312b, 313c) in einer Sektion entlang der Reifenumfangsrichtung umfasst, und die Anzahl von gebogenen Abschnitten (112a, 112b, 112c, 312a, 312b, 313c) in dem Zwischenbereich (Wmid) kleiner als die Anzahl von gebogenen Abschnitten (112a, 112b, 112c, 312a, 312b, 313c) in mindestens einem vom zentralen Bereich (Wctr) und dem Schulterbereich (Win, Wout) ist.

4. Reifen nach Anspruch 1, wobei eine Breite Wsho des Schulterstegabschnitts (30, 40) in der Reifenbreitenrichtung und eine Breite Ws der Breitenrichtungslamelle (100, 300) eingestellt sind, um die Beziehung $0,75 \leq (Breite\ Ws/Breite\ Wsho) \leq 0,885$ zu erfüllen.

5. Reifen nach Anspruch 1, wobei die Breitenrichtungslamelle (100, 300) in jedem von einem Schulterstegabschnitt (30), welcher auf einer Innenseite angeordnet ist, wenn der Reifen (10) auf dem Fahrzeug montiert ist, und von einem Schulterstegabschnitt (40) geformt ist, welcher auf einer Außenseite angeordnet ist, wenn der Reifen (10) auf dem Fahrzeug montiert ist.

## Revendications

1. Bandage pneumatique (10), comprenant :

une partie d'appui centrale (20) formée dans une région incluant une ligne équatoriale du bandage pneumatique (CL) ; et
une partie d'appui d'épaulement (30), 40) formée au niveau d'un côté externe, dans une direction de la largeur du bandage pneumatique, par rapport à la partie d'appui centrale (20) ;
**caractérisé en ce que** :

une lamelle dans la direction de la largeur (100, 300) s'étendant dans la direction de la largeur du bandage pneumatique et se terminant dans la partie d'appui d'épaulement (30, 40) est formée dans la partie d'appui d'épaulement (30, 40) ;
la lamelle dans la direction de la largeur (100, 300) inclut une partie en zigzag (112, 312) formée en une forme en zigzag, dans une direction circonférentielle du bandage pneumatique, vers au moins un côté interne d'une direction radiale du bandage pneumatique, une région centrale (Wctr) agencée au niveau d'un côté de la ligne équatoriale du bandage pneumatique (CL), dans la direction de la largeur du bandage pneumatique, une région d'épaulement (Win, Wout) agencée au niveau d'un côté d'une extrémité de contact au sol de la partie d'appui d'épaulement (30, 40), dans la direction de la largeur du bandage pneumatique, et une région intermédiaire (Wmid) agencée entre la région centrale (Wctr) et la région d'épaulement (Win, Wout), dans la direction de la largeur du bandage pneumatique ; et
la partie en zigzag (112, 312) dans la région centrale (Wctr) et la partie en zigzag (112, 312) dans la région d'épaulement (Win, Wout) sont plus longues que la partie en zigzag (112, 312) dans la partie intermédiaire (Wmid), dans la direction radiale du bandage pneumatique ; dans lequel
la lamelle dans la direction de la largeur (100, 300) inclut une partie droite (111, 311) formée en une forme droite, dans la direction radiale du bandage pneumatique et dans la direction de la largeur du bandage pneumatique, d'une surface de bande de roulement (15) de la partie d'appui d'épaulement (30, 40) vers une profondeur prédéterminée de la lamelle dans la direction de la largeur (100, 300).

**2.** Bandage pneumatique selon la revendication 1, dans lequel un rapport entre la partie droite (111, 311) et la partie en zigzag (112, 312), dans la direction radiale du bandage pneumatique, est réduit en direction de l'extrémité de contact au sol de la partie d'appui d'épaulement (30, 40).

**3.** Bandage pneumatique selon la revendication 1, dans lequel la partie en zigzag (112, 312) inclut plusieurs parties fléchies (112a, 112b, 112c, 312a, 312b, 313c) dans une section le long de la direction circonférentielle du bandage pneumatique ; et
le nombre de parties fléchies (112a, 112b, 112c, 312a, 312b, 313c) dans la région intermédiaire (Wmid) est inférieur au nombre de parties fléchies (112a, 112b, 112c, 312a, 312b, 313c) dans au moins l'une de la région centrale (Wctr) et la région d'épaulement (Win, Wout).

**4.** Bandage pneumatique selon la revendication 1, dans lequel une largeur Wsho de la partie d'appui d'épaulement (30, 40), dans la direction de la largeur du bandage pneumatique, et une largeur Ws de la lamelle dans la direction de la largeur (100, 300) sont ajustées de sorte à satisfaire la relation de $0,75 \leq$ (largeur Ws/largeur Wsho) $\leq 0,885$.

**5.** Bandage pneumatique selon la revendication 1, dans lequel la lamelle dans la direction de la largeur (100, 300) est formée, dans chacune d'une partie d'appui d'épaulement (30) agencée au niveau d'un côté interne lorsque le bandage pneumatique (10) est monté sur le véhicule, et d'une partie d'appui d'épaulement (40) agencée au niveau d'un côté externe lorsque le bandage pneumatique (10) est monté sur le véhicule.

FIG. 1

FIG. 2

# FIG. 3

# FIG. 4

# FIG. 5

# FIG. 6

(a)

INNER SIDE
WHEN TIRE IS
MOUNTED TO
VEHICLE

(b)

OUTER SIDE
WHEN TIRE IS
MOUNTED TO
VEHICLE

## FIG. 7

REMAINING AMOUNT OF GROOVE FROM NEW TIRE

MOUNTED TO FRONT AXLE

SHOULDER GROOVE
AT OUTER SIDE
WHEN TIRE IS MOUNTED
TO VEHICLE

SHOULDER GROOVE
AT INNER SIDE
WHEN TIRE IS MOUNTED
TO VEHICLE

———— : EXAMPLE 1

-------- : COMPARATIVE EXAMPLE

# FIG. 8

(a)

(b)

TIRE RADIAL
DIRECTION

TIRE WIDTH
DIRECTION

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000255219 A
- JP 2011105135 A
- EP 2774782 A1
- JP 2007045316 A
- JP 2007261296 A